# EUROPÄISCHE PATENTSCHRIFT

(11) **EP 0 929 584 B1**
(45) Veröffentlichungstag und Bekanntmachung des Hinweises auf die Patenterteilung: **09.05.2001**
(21) Anmeldenummer: 97943879.3
(22) Anmeldetag: 22.09.1997
(51) Int. Cl.: C08F 214/22

(54) **FLÜSSIG-FLUORKAUTSCHUK**
LIQUID FLUORIC RUBBER
CAOUTCHOUC FLUORE LIQUIDE

(30) Priorität: 04.10.1996 DE 19640972
(43) Veröffentlichungstag der Anmeldung: 21.07.1999
(73) Patentinhaber: Bayer Aktiengesellschaft, 51368 Leverkusen (DE)
(72) Erfinder: KRÜGER, Ralf, D-51061 Köln (DE); ACKERMANN, Jürgen, D-51381 Leverkusen (DE)
(86) Internationale Anmeldenummer: EP9705191
(87) Internationale Veröffentlichungsnummer: WO9815583

(56) Entgegenhaltungen:
- EP-A- 0 171 290
- EP-A- 0 743 329
- EP-A- 0 811 641
- WO-A-92/20743
- WO-A-96/24624
- US-A- 4 361 678
- US-A- 5 231 154

## Beschreibung

Die vorliegende Erfindung betrifft einen neuen Flüssig-Fluorkautschuk, ein Verfahren zu seiner Herstellung und seine Verwendung.

In der Gummiindustrie besteht ein genereller Wunsch nach besserer Verarbeitbarkeit der eingesetzten Kautschuke. Insbesondere betrifft dies die Fließeigenschaften. Je niedrigviskoser der Rohkautschuk ist, desto einfacher ist die Verarbeitungstechnologie, desto größer ist die Produktivität und desto geringer ist der Abfall. Die genannten Aspekte sind insbesondere bei Fluorkautschuken von großer Relevanz, da es sich hierbei um teure Kautschuke handelt, die nicht durchgehend auf Spritzgießmaschinen der Gummiindustrie verarbeitet werden.können.

Fluorkautschuke mit Mooney-Viskositäten (ML₁₊₁₀ bei 120°C) > 60 können meist nur durch Preß- oder Transfer-Molding-Verfahren verarbeitet werden. Fluorkautschuke mit Mooney-Viskositäten ≤ 60 können zwar auf speziellen Spritzgießmaschinen für Festkautschuke verarbeitet werden, jedoch erfordert dies lange Zykluszeiten und ist zudem mit einem erheblichen Anteil an Abfall (Flash-out) verknüpft, und es können daraus keine komplizierten kleinen Formteile hergestellt werden.

Bekannt sind Kautschuke mit Mooney-Viskositäten von 20-60 Mooney-Einheiten, die nach diesem Prinzip zu Formpreßteilen verarbeitet werden können. Diese Kautschuke weisen noch keine deutliche Verschlechterung der gummimechanischen Eigenschaften auf [P. Ferrandez, St. Bowers, Gummi Fasern Kunstst. 48 (1995) 626-633].

Eine weitere Verminderung des Molgewichtes zum Zwecke der Viskositätsabsenkung darüberhinaus führt aber bei Kautschuken, insbesondere bei Fluorkautschuken zu einer Verschlechterung der Vulkanisateigenschaften (Festigkeit). So werden z.B. in US-A 4 361 678 Flüssig-Fluorkautschuke beschrieben, die ein Zahlenmittel der Molekulargewichte zwischen 900 und 10.000 g/mol sowie Iod-gehalte zwischen 1 und 30 % aufweisen. Die in den Beispielen beschriebenen Produkte mit Iodgehalten zwischen 4,5 und 26 %, sind bereits bei Raumtemperatur flüssig. Zwar lassen sie sich über ihre endständigen Iodatome in Gegenwart von Peroxiden und großer Mengen Covernetzer radikalisch vernetzen, die Gummi-Eigenschaften dieser Elastomere sind jedoch unbefriedigend.

Aus der älteren Anmeldung EP-A1-811 641 sind Fluorkautschuke bekannt, bei denen das gewünschte Ziel der niedrigen Viskosität, die für eine Verarbeitung nach der Flüssigkautschuk-Spritzgußtechnologie erforderlich ist, über hohe Iodgehalte und damit niedrige Molekulargewichte erreicht wurde. Letzteres hat jedoch wiederum geringe Dehnungen und/oder Festigkeiten zur Folge.

Zudem sind diese Fluorkautschuke nur aufwendig herstellbar, da bei der Emulsionspolymerisation erhebliche Probleme und Nachteile durch Nebenreaktionen des Molekulargewichtsreglers in der wäßrigen Phase sowie durch die Bildung von wasserlöslichen Oligomeren auftreten. Diese führen wiederum zu Ausbeuteverlusten des teuren Molekulargewichtsreglers, sehr langen Polymerisationszeiten, hohen Abwasserbelastungen sowie schlechten Produkteigenschaften.

EP-A1-171 290 und EP-A1-743 329 betreffen Copolymere aus Fluormonomeren, von denen eines lod enthält. Somit enthalten die resultierenden Polymere an der Kette seitenständiges lod und nicht nur endständiges lod.

Praktikable Verfahren in nicht-wäßrigen Medien sind jedoch nicht bekannt, da die für Fluorkautschuke gängigen Lösungsmittel durchweg sehr starke Übertragungsmittel für die Polymerisation darstellen. In inerten Lösungsmitteln, wie Fluorchlorkohlenstoffen, Fluorkohlenstoff- oder Fluorkohlenwasserstoffverbindungen lösen sich herkömmliche Fluorkautschuke dagegen nicht. Dies führt dazu, daß der Kautschuk während der Polymerisation als kompakte zähe Masse ausfällt (Fällungspolymerisation), und u.a. Wandablagerungen bildet, die eine schlechte Wärmeabführung zur Folge haben. Zudem verursacht dies Probleme beim Produktaustrag sowie aufgrund von stark herabgesetzter Monomerdiffusion eine geringe Raum/Zeit-Ausbeute.

Flüssig-Fluorkautschuke, die über ein zufriedenstellendes Eigenschaftsprofil sowohl im Hinblick auf die für die Verarbeitung relevante Viskosität als auch bezüglich der Gummimechanik des Endprodukts verfügen, sind nicht bekannt.

Es bestand daher ein Bedarf an Flüssig-Fluorkautschuken, die zumindest bei leicht erhöhten Temperaturen (60-120°C) pumpbar und auf herkömmlichen Thermoplastmaschinen verarbeitbar sind. Zudem sollten diese Flüssig-Fluorkautschuke leicht vernetzbar sein und die resultierenden Gummiteile gute mechanische sowie Alterungs-Eigenschaften besitzen, die denen von herkömmlichen Fest-Fluorkautschuken sehr nahe kommen und zudem einfach herstellbar sein.

Es wurde nun gefunden, daß ein Fluorkautschuk, bestehend aus Vinylidenfluorid und gegebenenfalls weiteren fluorhaltigen und/oder nicht-fluorhaltigen Monomeren sowie 0,5 - 2,5 Gew.-% endständigem Iod mit einem Molekulargewicht Mn zwischen 10.000 und 25.000 g/mol sowie einer molekularen Uneinheitlichkeit von kleiner als 1 und einer komplexen Viskosität bei 100°C und ω = 6.3 s⁻¹ zwischen 5 und 1.000 Pa·s das gewünschte Eigenschaftsprofil aufweist.

Gegenstand der vorliegenden Erfindung ist daher ein Flüssig-Fluorkautschuk, bestehend aus Vinylidenfluorid und mindestens einem weiteren fluorhaltigen und/oder nicht-fluorhaltigen Monomeren sowie ausschließlich endständigem Iod, dadurch gekennzeichnet, daß
die Iod-Gehalte 0,5 - 2,5 Gew.-% betragen,
die Zahlenmittel der Molekulargewichte (Mn) zwischen 12.600 und 25.000 g/mol liegen und die molekulare Uneinheitlichkeit, definiert als U = Mw/Mn-1, kleiner als 1 ist und
die komplexe Viskosität bei 100°C und ω = 6,3 s⁻¹ zwischen 5 und 1.000 Pa·s liegt.

Fluorhaltige Monomere im Sinne der Erfindung sind vorzugsweise fluorierte, gegebenenfalls substituierte Ethylene, die neben Fluor Wasserstoff und/oder Chlor enthalten können, wie z.B. Vinylidenfluorid, Tetrafluorethylen und Chlortrifluorethylen, fluorierte 1-Alkene mit 2-8 Kohlenstoffatomen, wie z.B. Hexafluorpropen, 3,3,3-Trifluorpropen, Chlorpentafluorpropen, Hexafluorisobuten und/oder perfluorierte Vinylether der Formel CF₂=CF-O-X mit X = C₁-C₃-Perfluoralkyl oder -(CF₂-CFY-O)ₙ-R_{F}, wobei n = 1-4, Y = F oder CF₃ und R_{F} = C₁-C₃-Perfluoralkyl bedeuten.

Nicht-fluorhaltige Monomere im Sinne der Erfindung sind vorzugsweise Ethylen, Propen, Isobuten oder Vinylester, wie z.B. Vinylacetat.

Besonders bevorzugt ist die Kombination aus Vinylidenfluorid, Hexafluorpropen sowie gegebenenfalls Tetrafluorethylen und/oder perfluorierten Vinylethern, wie z.B. Perfluor-(methyl-vinyl-ether).

Die erfindungsgemäßen Flüssig-Fluorkautschuke enthalten 0,5-2,5 Gew.-% Iod, das kovalent an den endständigen Kohlenstoffatomen gebunden ist. Dieses Iod wird vorzugsweise durch Molekulargewichtsregelung mit Hilfe von diiodorganischen Verbindungen, die als Kettenübertragungsmittel wirken, eingeführt.

Die Zahlenmittel der Molekulargewichte (Mn) des erfindungsgemäßen Flüssig-Fluorkautschuks liegen zwischen 10.000 und 25.000 g/mol und wurden durch Membranosmometrie bestimmt. Die molekulare Uneinheitlichkeit, definiert als U = Mw/Mn-1, wird aus gelpermeationschromatographischen Messungen (GPC) mit RI-Detektion in Dimethylacetamid (DMAC) unter Zusatz von 1 g/l LiBr bei 40°C, die mit einer speziellen Eichkurve für Polyethylenoxid ausgewertet worden sind, bestimmt. Sie liegt bei den erfindungsgemäßen Produkten bei Werten < 1.

Die komplexen Viskositäten des erfindungsgemäßen Flüssig-Fluorkautschuks, gemessen mit einem Bohlin-Rheometer des Typs VOR-Melt (Kreisfrequenz ω = 6,3 s⁻¹), liegen bei 100°C zwischen 5 und 1.000 Pa·s. Sie zeigen eine sehr starke Temperaturabhängigkeit. Der Temperaturindex der Viskositäten des erfindungsgemäßen Flüssig-Fluorkautschuks, berechnet als Quotient der Viskositäten bei 40 und 100°C, liegt vorzugsweise zwischen 100 und 1.000.

Ein weiteres Kennzeichen der erfindungsgemäßen Flüssig-Fluorkautschuke ist, daß die komplexe Viskosität bei Temperaturen > 80°C bei Verringerung der Kreisfrequenz von 50 auf 0,5 s⁻¹ vorzugsweise maximal um den Faktor 5 zunimmt, d.h. kaum Strukturviskosität zu beobachten ist.

Gegenstand der vorliegenden Erfindung ist zudem ein Verfahren zur Herstellung des erfindungsgemäßen Flüssig-Fluorkautschukes, wonach Vinylidenfluorid und mindestens ein weiteres fluorhaltiges und/oder nicht-fluorhaltiges Monomer in Gegenwart von mindestens einer diiodorganischen Verbindung und mindestens einem Initiator

in einer flüssigen Reaktionsphase, in der die Monomere, der Initiator und die diiodorganische Verbindung gelöst sind, bei Temperaturen von 30 bis 130°C

unter einem Druck derart, daß der Anteil des Monomers in der flüssigen Reaktionsphase mindestens 20 Gew.-% beträgt und in Abwesenheit von Wasser radikalisch polymerisiert werden, wobei der gebildete Fluorkautschuk eine separate Phase , die vorzugsweise flüssig ist, bildet.

Bei den erfindungsgemäß zur Molekulargewichtsregelung bzw. als Kettenübertragungsmittel eingesetzten diiodorganischen Verbindungen handelt es sich vorzugsweise um Verbindungen des Typs RI₂ mit R = ein aliphatischer Kohlenwasserstoff-, Fluorkohlenwasserstoff-, Fluorchlorkohlenwasserstoff- oder Fluorkohlenstoffrest mit 1-8 Kohlenstoffatomen, wobei die beiden Iodatome an einem oder an unterschiedlichen Kohlenstoffatomen gebunden sein können. Besonders bevorzugt sind Kohlenwasserstoff- oder Fluorkohlenstoffverbindungen mit einem oder 4 Kohlenstoffatomen, wobei sich das Iod an den endständigen Kohlenstoffatomen befindet. Ganz besonders bevorzugt sind Diiodmethan und/oder 1,4-Diiodperfluorbutan. Die Menge an diiodorganischer Verbindung beträgt vorzugsweise 0,5 - 2,8 Gew.-Teile Iod pro 100 Gew.-Teile polymerisiertem Fluormonomer.

Als Initiator werden vorzugsweise jeweils organische oder fluororganische Dialkylperoxide, Diacylperoxide, Dialkylperoxydicarbonate, Alkylperester und/oder Perketale eingesetzt. Art und einzusetzende Menge hängen von der jeweiligen Reaktionstemperatur ab. Vorzugsweise liegen die Halbwertszeiten des auszuwählenden Peroxids zwischen 30 und 500 min. Die Mengen an eingesetztem Initiator liegen vorzugsweise zwischen 0,1 bis 1 Gew.-Teilen, bezogen auf 100 Gew.-Teile umzusetzender Monomere.

In einer bevorzugten Ausführungsform der Erfindung wird die Polymerisation in Gegenwart des Initiators und der diiodorganischen Verbindung und mindestens eines inerten Lösungsmittels für die Monomere durchgeführt. Diese Reaktionsführung, bei der bei geringeren Drücken und mit geringerem Monomereinsatz gearbeitet werden kann, hat sich im Hinblick auf die Reaktionsführung und die Raum/Zeit-Ausbeute als vorteilhaft erwiesen. Bei diesem Polymerisationstyp handelt es sich um eine 2-Flüssig-Phasen-Polymerisation, da daß entstehende (unter Reaktionsbedingungen flüssige) Polymer in der flüssigen Monomer/Lösungsmittel-Phase nicht löslich ist. Überraschenderweise können durch diese Art der Herstellung die bei der klassischen Fällungspolymerisation auftretenden Nachteile vermieden werden.

Das eingesetzte inerte Lösungsmittel wird vorzugsweise so ausgewählt, daß es unter den Reaktionsbedingungen keine wesentlichen Übertragungsreaktionen eingeht. Als solche sind bestimmte Fluorkohlenwasserstoff-, Fluorchlorkohlenwasserstoff- oder Fluorchlorkohlenstoffverbindungen bevorzugt, wie z.B.:
1,1,2,2,3,3-Hexafluorcyclopentan,
1,1,2,2-Tetrafluorcyclobutan,
1-Trifluormethyl-1,2,2-trifluorcyclobutan,
2,3-Dihydrodekafluorpentan,
Perfluorbutylethan,
2,2-Bis(trifluormethyl)-1,3-dioxolan,
Perfluor(tripropylamin), Perfluor(triethylamin),
(Methyl-2-hydrohexafluorpropyl)ether,
2-Chlor-1,1,1-trifluorethan,
1,2-Dichlortetrafluorethan,
1,1,2-Trichlortrifluorethan und / oder
1,1,2,2-Tetrachlordifluorethan.

Das Verhältnis aus Monomer zu Lösungsmittel sowie der Reaktörfüllgrad wird vorzugsweise so gewählt, daß bei der Reaktionstemperatur der Anteil des Monomers in der flüssigen Phase mindestens 20 Gew.-% beträgt. Die Menge an in der Flüssigphase gelöstem Monomer kann z.B. aus der Massenbilanz anhand der Partialdrücke des in der Gasphase befindlichen Monomers bestimmt werden.

Die Reaktionstemperaturen liegen vorzugsweise zwischen 30 und 130°C. Niedrigere Temperaturen führen zu einer drastischen Verlängerung der Laufzeit und zu einem starken Viskositätsanstieg des Polymers, so daß Probleme bezüglich Stoffübergang, Wärmeabführung und Produktaustrag entstehen. Mit noch höheren Temperaturen läßt sich die Raum-Zeit-Ausbeuten nicht mehr wesentlich steigern, während die Produkteigenschaften sich verschlechtern. Ein besonders bevorzugter Temperaturbereich für die Polymerisation ist 60-120°C.

Der Druck hängt von den vorgenannten Bedingungen sowie von der Zusammensetzung des Monomergemisches ab und liegt vorzugsweise zwischen 10 und 150 bar. In dem erfingungsgemäßen Verfahren wird besonders bevorzugt bei Drücken zwischen 20 und 50 bar gearbeitet.

Die Polymerisation kann im Batch-, Konti- oder Batch/Zulauf-Verfahren in Rührkesselreaktoren durchgeführt werden, wobei das Batch/Zulaufverfahren bevorzugt wird.

In einer Ausführungsform der Erfindung wird der Fluorkautschuk nach Beendigung der Polymerisation bei einer Temperatur, die vorzugsweise mindestens der Reaktionstemperatur entspricht, durch einen Bodenablaß aus dem Reaktionsgefäß gedrückt. Die für diesen Schritt notwendige Temperatur hängt von der jeweiligen Viskosität des Fluorkautschuks ab und ist gegenüber der Reaktionstemperatur zu erhöhen, wenn die Viskosität des Fluorkautschuks bei Reaktionstemperatur noch kein selbständiges Herausfließen aus dem Reaktor ermöglicht.

In einer weiteren bevorzugten Ausführungsform der Erfindung ist zur Erniedrigung der Viskosität beim Ablaßvorgang noch mindestens ein Teil des Monomers und/oder des Hilflösungsmittels zugegen. Anschließend wird in einem geeigneten Aggregat das verbleibende Monmer bzw. Hilfslösungsmittel vom Produkt abgetrennt und einem Wiedereinsatz zugeführt. Der besondere Vorteil dieses Verfahrens gegenüber den üblichen Polymerisationsverfahren in wäßriger Dispersion, z.B. Emulsionspolymerisation, besteht darin, daß keine weitere Aufarbeitung erforderlich ist und insbesondere kein Abwasser anfällt.

Gegenstand der Erfindung ist zudem die Verwendung des erfindungsgemäßen Flüssig-Fluorkautschuks als Beschichtungsmaterial oder zur Herstellung von gummielastischen Formkörpern.

Zur Herstellung einer vernetzungsfähigen Mischung als Ausgangsstoff für die Herstellung von gummielastischen Formkörpern werden dem Fluorkautschuk Füllstoffe, wie z.B. Ruß, Kieselsäure, Titandioxid, Calziumsilikat oder Bariumsulfat, Säureakzeptoren, wie z.B. Ca(OH)₂, CaO, ZnO, MgO, und/oder Vernetzungschemikalien, d.h. z.B. ein organisches Peroxid in Kombination mit einem Covernetzer wie Triallylisocyanurat (siehe z.B. EP-A 398 241) oder Bisamine bzw. Bisphenole in Kombination mit Phasentransferkatalysatoren und Metalloxiden, wie von A.L. Logothetis in Polym. Sci. 14 (1989) 251-296 beschrieben, und weitere Zusätze, wie Verarbeitungshilfsmittel, zugemischt. Diese können sowohl in bekannten Mischaggregaten, wie Knetern und auf Zweiwalzenmischwerken, als auch mit Hilfe von Mixern in das Polymer eingearbeitet werden.

Die verbesserte Fließfähigkeit des erfindungsgemäßen Fluorkautschuks erlaubt den Einsatz von vernetzenden bzw. die Vernetzung aktivierenden/auslösenden Chemikalien mit erhöhter Reaktivität, die eine schnellere Vernetzung bewirken. Bevorzugt wird der erfindungsgemäße Fluorkautschuk radikalisch mittels handelsüblicher Peroxide in Kombination mit Triallylisocyanurat, Triallylcyanurat, Tri(meth)allylisocyanurat, Tetramethyltetravinylcyclotetra-siloxan, Triallylphosphit und/oder N,N'-m-Phenylenbismaleinimid, vernetzt.

Als Peroxide werden vorzugsweise 1,1-Bis(tert.butylperoxy)-3,3,5-trimethyl-cyclohexan, Biscumylperoxid, Bis(1,1-dimethylpropyl)peroxid, n-Butyl-4,4-di(tert.butylperoxy)valerat, 2,5-Dimethyl-2,5-di-(tert.butylperoxy)hexan, 1,3-Bis(2-tert.butylperoxy-isopropyl)benzol, tert.Butylcumylperoxid, Bis(tert.amyl)peroxid, Bis(tert.'-butyl)peroxid und/oder tert.Butylperbenzoat eingesetzt. Die.Peroxide werden vorzugsweise in Mengen von 0,5-10 Gew.-Teilen, besonders bevorzugt 1-4 Gew.-Teilen, bezogen auf 100 Teile. Fluorkautschuk, eingesetzt.

Triallylisocyanurat, Triallylcyanurat, Tri(meth)allylisocyanurat, Tetramethyltetravinylcyclotetra-siloxan, Triallylphosphit und/oder N,N'-m-Phenylenbismaleinimid werden vorzugsweise in Mengen von jeweils 0,5-12 Gew.-Teilen, besonders bevorzugt 1-6 Gew.-Teilen, bezogen auf 100 Teile. Fluorkautschuk, eingesetzt.

Die Herstellung von gummielastischen Formkörper kann sowohl nach herkömmlichen Verfahren, wie sie in der Gummiindustrie üblich sind, wie z.B. Preß- oder Transfer-Molding, als auch an einfachen Thermoplast-Spritzguß- oder Kolbendosiermaschinen erfolgen. Vorzugsweise wird der erfindungsgemäße Fluorkautschuk auf 40 bis 250°C aufgeheizt in die Thermoplast-Spritzguß- oder Kolbendosiermaschine eingeführt. Dafür eignen sich besonders beheizte Dosier- und Fördermaschinen, vorzugsweise beheizte Schöpfkolbenpumpen.

Aus den erfindungsgemäßen Fluorkautschuken können mit der vorteilhaften Technologie der Flüssigkautschukverarbeitung vernetzte Formteile mit gummielastischen und Alterungseigenschaften hergestellt werden, die das Niveau der aus Fest-Fluorkautschuken hergestellten erreichen.

Die nachstehenden Beispiele dienen der Erläuterung der Erfindung, ohne jedoch -limitierend zu wirken.

### Ausführungsbeispiele:

### Beispiel 1

In einem 4,1-1-Autoklaven wurden 620 ml 1,1,2-Trichlor-2,2,1-trifluorethan (Frigen 113, R 113) und 9 g Diiodmethan (DIM, Fa. Merck) vorgelegt. Der geschlossene Autoklav wurde unter Kühlung zweimal jeweils evakuiert, anschließend mit 3 bar Stickstoffdruck beaufschlagt und jeweils 10 min langsam gerührt. In den evakuierten Autoklaven wurden 440 g Vinylidenfluorid (VDF) und 880 g Hexafluorpropen (HFP) gegeben und das Reaktionsgemisch unter Rühren auf 60°C erwärmt. Nach Erreichen dieser Temperatur betrug der Autoklaveninnendruck 27 bar. Daraus wurde der Anteil des gelösten Monomers an der flüssigen Phase mit ca. 47 Gew.-% abgeschätzt. Die Polymerisation wurde eingeleitet durch die Zugabe von 3,4 g tert.-Butylperoxypivalat als TBPPI-75-AL (Lösung in Aliphaten, Fa. Peroxid-Chemie GmbH) mit einem Peroxidgehalt von 59% gelöst in 20 g Frigen 113. An der beginnenden Druckabnahme erkennbar, setzte die Polymerisation nach wenigen Minuten ein. Während der Polymerisation wurde ein Monomergemisch aus 60 Gew.% Vinylidenfluorid und 40 Gew.% Hexafluorpropen so nachgedrückt, daß der Autoklaveninnendruck konstant auf 27±0,4 bar gehalten wurde. Innerhalb einer Reaktionszeit von 12 h wurden auf diese Weise insgesamt 306 g Vinylidenfluorid und 200 g Hexafluorpropen nachdosiert. Nach Beendigung der Polymerisation wurde das Reaktionsgemisch abgekühlt und das nicht umgesetzte Monomergemisch durch Entspannung und Evakuierung aus dem Reaktor entfernt. Der verbleibende Reaktorinhalt (Polymer + Frigen) wurde unter Rühren auf 80°C erhitzt. 15 min nach Abstellen des Rührers wurde der Reaktorinhalt über ein Bodenablaßventil vollständig in ein zweites darunterliegendes Druckgefäß abgelassen. Im Reaktor blieben keinerlei Produktreste zurück.

Nach Abtrennung des Produkts vom Frigen 113 (R 113) wurde dieses getrocknet, wobei 488 g eines zähflüssigen Copolymers resultierten.

Durch 19F-NMR-Analysen (Lösungsmittel: Aceton; Standard: CFCl₃) wurde folgende Copolymerzusammensetzung bestimmt: 20,7 mol.% Hexafluorpropen, 79,3 mol.% Vinylidenfluorid.

Der durch Elementaranalyse bestimmte Iodgehalt des Polymers betrug 1,5 Gew.-%. Das Zahlenmittel der Molekulargewichte (Membranosmose) lag bei 14 .900 g/mol. Die durch GPC-Untersuchungen bestimmte molekulare Uneinheitlichkeit U betrug 0,79.

An einem Bohlin-Rheometer des Typs VOR MELT wurden bei verschiedenen Temperaturen die komplexen Viskositäten gemessen. Die Ergebnisse sind in Tabelle 1 aufgelistet.

Zur Herstellung einer vernetzungsfähigen Mischung wurden auf einem gut gekühlten Zweiwalzenmischwerk auf 100 Gew.-Teile des Fluorkautschukcopolymers 30 Teile Ruß MT N 990, 3 Teil. Calciumhydroxid, 4 Teile Perkalink 301/50 (Triallylisocyanurat, 50 %ig auf Silicagel) sowie 3 Teile Luperco 130 XL-45 (2,5-Dimethyl-2,5-bis(tertiärbutylperoxy)-hexin-3; 45%ig in inaktiven Füllstoffen) eingearbeitet.

Zur Bestimmung des Vernetzungsverhaltens wurden die peroxidhaltigen Mischungen in einem Monsanto-Rheometer des Typs MDR 2000 E bei 170°C untersucht (Meßzeit 30 min).

Die Mischungen wurden bei 170°C und 200bar in Formen für 1x10x10 mm Platten und 6x70 mm Zylinder 30min druckvulkanisiert und anschließend in einem Umluftofen nachvulkanisiert (1 h bei 160°C, 1 h bei 170°C, 2 h bei 180°C und 20 h bei 230 °C). An den vulkanisierten Formkörpern wurden die Zug-/Dehnungseigenschaften vor und nach Heißluftalterung (72 h / 275°C) bzw. Ölalterung (5x94 h in BP MK 4437 bei 160°C) sowie die Druckverformungsreste (Zylinder, 70 h / 200°C) bestimmt. Die Ergebnisse sind in Tabelle 2 aufgelistet.

### Beispiele 2-5

Die Polymerisation wurde in analoger Weise wie im Beispiel 1 durchgeführt, wobei zum einen die Monomer- und Frigenvorlagemengen geändert wurden und zum anderen die Temperatur auf 40 bzw. 80°C eingestellt sowie als Peroxide Dicyclohexylperoxididcarbonat (CHPC) bzw. tert.-Butyl-per-2-ethylhexanoat (TBPEH) in folgenden Mengen eingesetzt worden sind und folgende Ergebnisse resultierten:

| variierte Parameter und Ergebnisse | | Beispiel | 2 | 3 | 4 | 5 |
|---|---|---|---|---|---|---|
| Polymerisationstemperatur | | [°C] | 60 | 60 | 40 | 78 |
| Vorlagemengen: | R 113 | [g] | 480 | 980 | 980 | 980 |
| | VDF | [g] | 882 | 220 | 440 | 440 |
| | HFP | [g] | 1760 | 440 | 880 | 880 |
| | DIM | [g] | 13 | 3 | 9 | 9 |
| Reaktionsdruck | | [bar] | 37 | 20 | 20 | 32 |
| Monomeranteil an der Flüssigphase | | [Gew.-%] | 78 | 29 | 50 | 45 |
| Peroxid | | | TBPPI | TBPPI | CHPC | TBPEH |
| Peroxidgehalt | | [%] | 59 | 59 | 93 | 100 |
| eingesetzte Mengen | | [g] | 3,5 | 2,67 | 7,4 | 2,5 |
| Laufzeit | | [h] | 22,4 | 16 | 12,8 | 7 |
| Produktausbeute | | [kg] | 600 | 330 | 483 | 470 |
| Iodgehalt | | [Gew.-%] | 1,4 | 0,7 | 1,4 | 1,5 |
| Zusammensetzung VDF/HFP | | [Mol%] | 80,7 | 78,6 | 80,5 | 79,2 |
| | | [Mol%] | 19,3 | 21,4 | 19,5 | 20,8 |
| Mn | | [g/mol] | 14 400 | 21 400 | 12 600 | 13 400 |
| U | | | 0,86 | 0,64 | 0,93 | 0,87 |

Die Kautschuke aus den Beispielen 3, 4 und 5 wurden in analoger Weise wie im Beispiel 1 beschrieben vulkanisiert, wobei jedoch 3 Teile Luperco 101 XL-45 (2,5-Dimethyl-2,5-bis(tertiärbutylperoxy)-hexan; 45 %ig in inaktiven Füllstoffen) anstelle des Luperco 130 XL-45 als Peroxid eingesetzt wurden. Die Ergebnisse sind in Tabelle 2 aufgeführt.

**Tabelle 1:**

| Komplexe Viskositäten η* bei verschiedenen Temperaturen, gemessen mit einem Bohlin-Rheometer VOR-Melt (Kreisfrequenz ω = 6,3 s⁻¹), jeweils in Pa·s und Quotienten der bei 80°C gemessenen Werte bei ω = 0,5 und 50 s⁻¹ | | | | | | | |
|---|---|---|---|---|---|---|---|
| Beispiel | 1 | 2 | 3 | 4 | 5 | | |
| Vergleichsbeispiel | | | | | | 1 | 2 |
| 40°C | 31500 | 27300 | 23200 | 11200 | 7860 | 12500 | 1470 |
| 80°C | 370 | 360 | 820 | 262 | 410 | 420 | 11,5 |
| 100°C | 110 | 105 | 200 | 74 | 52,6 | 160 | 2,2 |
| 120°C | 33 | 30 | 67 | 32 | 34 | 81 | 1,0 |
| 140°C | 12 | 10 | 25 | 17,2 | 20,8 | 45 | 0,43 |
| η*(40°C)/η*(100°C) | 286 | 260 | 116 | 151 | 149 | 78 | 668 |
| η*(80οC ; 0,5 s⁻¹)/η*(80°C;50s⁻¹) | 1,2 | 1,2 | 1,1 | 1,9 | 1,2 | 3,1 | 1,2 |

### Beispiel 6

Die Polymerisation wurde in analoger Weise wie im Beispiel 1 durchgeführt, wobei anstelle des Diiodmethans 15,2 g Diiodperfluorbutan (DIPFB, Fluorochem Ltd.) nach vorheriger Reinigung durch Ausschütteln mit wäßriger Natriumthiosulfatlösung eingesetzt wurden und folgende Ergebnisse resultierten:

| | | |
|---|---|---|
| Laufzeit | [h] | 11,2 |
| Produktausbeute | [kg] | 490 |
| Iodgehalt | [Gew.-%] | 1,6 |
| Zusammensetzung: | | |
| VDF | [Mol%] | 79 |
| HFP | [Mol%] | 21 |
| Mn | [g/mol] | 13 000 |
| U | | 0,81 |

### Beispiel 7

Die Polymerisation wurde in analoger Weise wie im Beispiel 6 durchgeführt, wobei anstelle des Frigens (R 113) 633 ml Perfluor(tripropylamin) sowie 11,9 g DIPFB eingesetzt worden sind.

Nach insgesamt 15 h Laufzeit wurden 360 g eines bei Raumtemperatur zähflüssigen und oberhalb 70°C dünnflüssigen Polymers mit einem Iodgehalt von 1,5 % isoliert.

### Vergleichsbeispiel 1

### (Fluorkautschuk, hergestellt über Emulsionspolymerisation)

In einem 36-1-Autoklaven wurden 25,2 kg entionisiertes Wasser und 60,2 g Lithiumperfluoroctylsulfonat vorgelegt. Darin wurden 40 g Oxalsäure-Dihydrat und 31 g Diiodmethan (Fa. Merck) gelöst, wobei sich in der gesamten wäßrigen Vorlage ein pH-Wert von 3,2 einstellte. Der geschlossene Autoklav wurde viermal jeweils evakuiert anschließend mit 3 bar Stickstoffdruck beaufschlagt und jeweils 10 min langsam gerührt. In den evakuierten Autoklaven wurden 269 g Vinylidenfluorid und 368 g Hexafluorpropen gegeben und das Reaktionsgemisch unter Rühren auf 25°C erwärmt. Nach Erreichen dieser Temperatur betrug der Autoklaveninnendruck 9,4 bar. Die Polymerisation wurde eingeleitet durch die Zugabe von 53 ml einer wäßrigen Lösung, die 20g/l Kaliumpermanganat enthielt. Sofort nach der einmaligen Zugabe wurde die besagte Lösung kontinuierlich mit einer Rate von 39ml/h weiterdosiert. An der beginnenden Druckabnahme erkennbar, setzte die Polymerisation nach 26 min ein. Während der Polymerisation wurde ein Monomergemisch aus 60 Gew.% Vinylidenfluorid und 40 Gew.% Hexafluorpropen so nachgedrückt, daß der Autoklaveninnendruck konstant auf 9,4±0,2 bar gehalten wurde. Außerdem wurden nach jeweils 200g Monomerumsatz 30 ml einer Lösung von Diiodmethan in 1,1,2-Trichlor-1,2,2-trifluorethan (100 g/l) zugegeben. Innerhalb einer Reaktionszeit von 15 h wurden auf diese Weise insgesamt 944 g Vinylidenfluorid und 622 g Hexafluorpropen sowie 45 g Diiodmethan zugepumpt. Zur Beendigung der Polymerisation wurde die Permanganatdosierung abgebrochen, das nicht umgesetzte Monomergemisch durch Entspannung und Evakuierung aus dem Reaktor entfernt und der verbleibende Autoklaveninhalt abgekühlt. Aus dem Latex wurden durch Gefrierkoagulation, Wäsche und Trocknung für 24h bei 50°C in einem Vakuumtrockenschrank 1340 g eines weichen kautschukartigen Copolymers isoliert.

Durch 19F-NMR-Analysen wurde folgende Copolymerzusammensetzung bestimmt: 19,8 mol.% Hexafluorpropen, 80,2 mol.% Vinylidenfluorid.

Der Iodgehalt des Polymers beträgt 2,7 Gew.-%. Das Zahlenmittel der Molekulargewichte (Membranosmose) liegt bei ca. 9 000 g/mol, die Uneinheitlichkeit U beträgt 1,2. Die an diesem Produkt gemessenen komplexen Viskositäten sind ebenfalls in Tabelle 1 eingetragen. Hier zeigt sich, daß dieses Produkt bei Temperaturen oberhalb 80°C trotz des geringeren Molekulargewichts höhere Viskositäten und eine stärkere Abhängigkeit vom Schergeschwindigkeitsgefälle aufweist.

Der resultierende Kautschuk wurde, wie im Beispiel 1 beschrieben, vulkanisiert. Die ebenfalls in Tabelle 2 enthaltenen Ergebnisse zeigen, daß die vulkanisierten Prüfkörper kürzere Dehnungen sowohl im Ausgangszustand als auch nach den Alterungsversuchen aufweisen.

### Vergleichsbeispiel 2

In einem 4,1-1-Autoklaven wurden 2,78 kg entionisiertes Wasser und 4,5 g Lithiumperfluoroctylsulfonat vorgelegt. Darin wurden 40 g 1,4-Diiod-perfluorbutan gelöst. Der geschlossene Autoklav wurde viermal jeweils evakuiert anschließend mit 3 bar Stickstoffdruck beaufschlagt und jeweils 10 min langsam gerührt. In den evakuierten Autoklaven wurden 27 g Vinylidenfluorid und 53 g Hexafluorpropen gegeben und das Reaktionsgemisch unter Rühren auf 80°C erwärmt. Nach Erreichen dieser Temperatur betrug der Autoklaveninnendruck 15 bar. Die Polymerisation wurde eingeleitet durch die Zugabe von 2,8 g Ammoniumperoxidisulfat, gelöst in 20 g Wasser. An der beginnenden Druckabnahme erkennbar, setzte die Polymerisation nach 7 min ein. Während der Polymerisation wurde ein Monomergemisch aus 60 Gew.% Vinylidenfluorid und .40 Gew.% Hexafluorpropen so nachgedrückt, daß der Autoklaveninnendruck konstant auf 17+0,2 bar gehalten wurde. Innerhalb einer Reaktionszeit von 6 h wurden auf diese Weise insgesamt 93 g Vinylidenfluorid und 216 g Hexafluorpropen nachdosiert. Zur Beendigung der Polymerisation wurde der Reaktorinhalt abgekühlt und das nicht umgesetzte Monomergemisch durch Entspannung und Evakuierung aus dem Reaktor entfernt. Der Latex wurde durch Einrühren in eine 6%-ige Calziumchloridlösung koaguliert, mit Wasser gewaschen und 24h bei 50°C in einem Vakuumtrockenschrank getrocknet, wobei 280 g eines zähflüssigen Copolymers erhalten wurden.

| | | |
|---|---|---|
| Iodgehalt | [Gew.-%] | 4,8 |
| Zusammensetzung: | | |
| VDF | [Mol%] | 80,5 |
| HFP | [Mol%] | 17,3 |
| -(CF₂)₄- | [Mol%] | 2,2 |
| Mn | [g/mol] | 5200 |
| U | | 1,0 |

Das Produkt wurde zunächst in analoger Weise wie die Produkte aus den Beispielen 3-5 vulkanisiert, wobei die Compoundierung in einem Haake-Kneter vorgenommen wurde. Die Messungen im Monsanto-Rheometer zeigten keine Vernetzung an (kein signifikanter s'-Anstieg). Erst nach Einarbeitung von insgesamt 10 Gew.-Teilen. Perkalink 301/50 konnte eine Vernetzung beobachtet werden.

Wie die ebenfalls in Tabelle 2 aufgeführten Ergebnisse zeigen, führt dieser Vulkanisationsversuch jedoch nur noch zu einem Produkt mit unbefriedigenden Elastomereigenschaften. Zudem weist dieser Fluorkautschuk einen ungewünscht hohen Iodgehalt auf.

### Vergleichsbeispiel 3

In diesem Vergleichsbeispiel erfolgte die Herstellung des Fluorkautschuks über die klassische Fällungspolymerisation und ohne Einsatz eines Reglers.

Die Polymerisation wurde in analoger Weise wie im Beispiel 5, jedoch ohne Diiodmethan vorzulegen, durchgeführt. Innerhalb einer im Vergleich zu Beispiel 5 um ca. 4 h auf 11,2 h verlängerten Reaktionszeit wurden 300 g Vinylidenfluorid und 200 g Hexafluorpropen nachgedrückt.

Der Versuch, das Produkt wie im Beispiel 1 abzulassen, mißlang: es lief nur ein Teil des Frigens ab, während das Polymer als zähe kompakte Masse im Reaktor verblieb und die Ablaufleitung verstopfte sowie einen starken Belag an der Reaktorwand und dem Rührer bildete. Das getrocknete kautschukartige Copolymer besitzt einen Mn-Wert von 68 900 g/mol.

Beim Versuch, das Produkt, wie im Beispiel 1 beschrieben, zu vulkanisieren, konnte keine Vernetzung (kein signifikanter Anstieg von s') beobachtet werden.

**Tabelle 2:**

| Vulkanisationsergebnisse und Eigenschaften der Vulkanisate | | | | | | | |
|---|---|---|---|---|---|---|---|
| **Beispiel** | | 1 | 3 | 4 | 5 | | |
| **Vergleichsbeispiel** | | | | | | 1 | 2 |
| **MDR-Ergebnisse** | | | | | | | |
| s' min | [dNm] | 0,07 | 0,01 | 0,01 | 0,02 | 0,02 | 0,01 |
| s' max | [dNm] | 18,2 | 9,8 | 7,02 | 13,0 | 13,4 | 31,2 |
| t 90 | [min] | 9,9 | 7,4 | 5,8 | 6,1 | 14,5 | 6,2 |

| **Ausgangsmechanik** | | | | | | | |
|---|---|---|---|---|---|---|---|
| Zugfestigkeit | [N/mm²] | 13,2 | 10,0 | 8,5 | 11,3 | 10,1 | 6,9 |
| Dehnung | [%] | 174 | 228 | 187 | 165 | 151 | 26 |
| S₅₀ | [N/mm²] | 3,2 | 2,5 | | | 3,2 | - |

| **DVR** | | | | | | | |
|---|---|---|---|---|---|---|---|
| (70h / 200°C) | [%] | 38 | n.b. | n.b. | n.b. | 39 | n.b. |
| **nach Heißluftalterung** **(70h/275°C)** | | | | n.b. | n.b. | | n.b. |
| Zugfestigkeit | [N/mm²] | 6,9 | 5,3 | | | 4,6 | |
| Dehnung | [%] | 113 | 152 | | | 69 | |
| S₅₀ | [N/mm²] | 3,4 | 2,4 | | | 3,7 | |
| **Ölalterung** in BP MK 4437 **(5 x 94 h / 160°C)** | | | | n.b. | n.b. | | n.b. |
| | | | | | | | |
| Gewichtszunahme | [%] | 0,44 | 0,32 | | | 0,40 | |
| Zugfestigkeit | [N/mm²] | 9,8 | 8,4 | | | 8,7 | |
| Dehnung | [%] | 123 | 165 | | | 95 | |
| S₅₀ | [N/mm²] | 3,8 | 2,7 | - | | 4,1 | |

| | | | | | | | |
|---|---|---|---|---|---|---|---|
| n.b. = nicht bestimmt | | | | | | | |

## Patentansprüche

1. Flüssig-Fluorkautschuk, bestehend aus Vinylidenfluorid und mindestens einem fluorhaltigen und/oder nicht fluorhaltigen Monomer sowie ausschließlich endständigem Jod, dadurch gekennzeichnet, dass
die lod -Gehalte 0,5-2,5 Gew.-% betragen,
die Zahlenmittel der Molekulargewichte (Mn) zwischen 12.600 und 25.000 g/mol liegen und die molekulare Uneinheitlichkeit kleiner als 1 ist und
die komplexe Viskosität bei 100°C und ω = 6,3 s⁻¹ zwischen 5 und 1.000 Pa·s liegt.

2. Fluorkautschuk nach Anspruch 1, dadurch gekennzeichnet, daß die komplexe Viskosität bei Temperaturen ≥ 80°C bei Verringerung der Kreisfrequenz ω von 50 auf 0,5 s⁻¹ maximal um den Faktor 5 zunimmt.

3. Fluorkautschuk nach einem der Ansprüche 1 oder 2, dadurch gekennzeichnet, daß der Temperaturindex der komplexen Viskosität, berechnet als Quotient der Viskositäten bei 40 und 100°C zwischen 100 und 1.000 liegt.

4. Verfahren zur Herstellung von Fluorkautschuk nach einem oder mehreren der Ansprüche 1 bis 3, dadurch gekennzeichnet, daß Vinylidenfluorid und mindestens ein weiteres fluorhaltiges und/oder nicht-fluorhaltiges Monomer in Gegenwart von mindestens einer diiodorganischen Verbindung und mindestens einem Initiator
in einer flüssigen Reaktionsphase, in der die Monomere, der Initiator und die diiodorganische Verbindung gelöst sind, bei Temperaturen von 30 bis 130°C
unter einem Druck derart, daß der Anteil des Monomers in der flüssigen Reaktionsphase mindestens 20 Gew.-% beträgt und in Abwesenheit von Wasser radikalisch polymerisiert werden, wobei der gebildete Fluorkautschuk eine separate Phase bildet.

5. Verfahren nach Anspruch 4, dadurch gekennzeichnet, daß die Menge an diiodorganischer Verbindung 0,5 - 2,8 "Gew.-Teile. Iod pro 100 Gew.-Teile polymerisiertem Fluormonomer beträgt.

6. Verfahren nach einem der Ansprüche 4 bis 5, dadurch gekennzeichnet, daß als Initiator organische oder fluororganische Peroxide aus der Gruppe der Dialkylperoxide, Diacylperoxide, Dialkylperoxydicarbonate, Alkylperester oder Perketale eingesetzt werden.

7. Verfahren nach einem oder mehreren der Ansprüche 4 bis 6, dadurch gekennzeichnet, daß die Umsetzung in Gegenwart mindestens eines inerten Lösungsmittels für die Monomere durchgeführt wird.

8. Verfahren nach einem oder mehreren der Ansprüche 4 bis 7, dadurch gekennzeichnet, daß als diiodorganische Verbindung Diiodmethan und/ oder 1,4-Diiodperfluorbutan eingesetzt wird.

9. Verfahren nach einem oder mehreren der Ansprüche 4 bis 8, dadurch gekennzeichnet, daß der Fluorkautschuk nach Beendigung der Polymerisation bei einer Temperatur, die mindestens der Reaktionstemperatur entspricht, durch einen Bodenablaß aus dem Reaktionsgefäß gedrückt wird.

10. Verfahren nach Anspruch 9, dadurch gekennzeichnet, daß während des Ablaßvorgangs mindestens noch ein Teil des während der Polymerisation benutzten Lösungsmittels und/oder Monomers zugegen ist.

11. Verwendung des Fluorkautschuks nach einem oder mehreren der Ansprüche 1 bis 3 als Beschichtungsmaterial oder zur Herstellung von gummielastischen Formkörpern.

## Claims

1. Liquid fluorinated rubber, consisting of vinylidene fluoride and at least one monomer containing fluorine and/or not containing fluorine as well as exclusively terminal iodine, characterized in that
the iodine contents are 0.5-2.5 wt.%,
the number average molecular weight (Mn) is between 12,600 and 25,000 g/mol and the molecular nonuniformity is less than 1 and
the complex viscosity at 100°C and ω = 6.3 s⁻¹ is between 5 and 1,000 Pa.s.

2. Fluorinated rubber according to Claim 1, characterized in that the complex viscosity increases by the factor 5 maximum at temperatures ≥ 80°C and reduction of the angular frequency ω from 50 to 0.5 s⁻¹.

3. Fluorinated rubber according to one of Claims 1 or 2, characterized in that the temperature index of the complex viscosity, calculated as quotient of the viscosities at 40 and 100°C, is between 100 and 1,000.

4. Process for producing fluorinated rubber according to one or more of Claims 1 to 3, characterized in that vinylidene fluoride and at least one further monomer containing fluorine and/or not containing fluorine are radically polymerized in the presence of at least one diiodo-organic compound and at least one initiator
in a liquid reaction phase in which the monomers, the initiator and the diiodo-organic compound are dissolved, at temperatures from 30 to 130°C
at a pressure in such a way that the content of the monomer in the liquid reaction phase is at least 20 wt.% and in the absence of water, wherein the fluorinated rubber formed forms a separate phase.

5. Process according to Claim 4, characterized in that the quantity of diiodo-organic compound is 0.5 - 2.8 parts by weight of iodine per 100 parts by weight of polymerized fluoromonomer.

6. Process according to one of Claims 4 to 5, characterized in that organic or fluoro-organic peroxides from the group of the dialkyl peroxides, diacyl peroxides, dialkylperoxydicarbonates, alkyl peresters or perketals are used as initiator.

7. Process according to one or more of Claims 4 to 6, characterized in that the reaction is carried out in the presence of at least one inert solvent for the monomers.

8. Process according to one or more of Claims 4 to 7, characterized in that diiodomethane and/or 1,4-diiodoperfluorobutane is used as diiodo-organic compound.

9. Process according to one or more of Claims 4 to 8, characterized in that after polymerization has ended the fluorinated rubber is pressed out of the reaction vessel through a base outlet at a temperature which corresponds at least to the reaction temperature.

10. Process according to Claim 9, characterized in that at least a part of the monomer and/or solvent used during polymerization is still present during the discharge process.

11. Use of the fluorinated rubber according to one or more of Claims 1 to 3 as coating material or for producing rubber-elastic moulded bodies.

## Revendications

1. Caoutchouc fluoré liquide consistant en fluorure de vinylidène et au moins un monomère fluoré et/ou non fluoré ainsi qu'en iode exclusivement terminal, caractérisé en ce que
les teneurs en iode vont de 0,5 à 2,5 % en poids,
les poids moléculaires moyens, moyenne en nombre (Mn) vont de 12 600 à 25 000 g/mol et l'hétérogénéité moléculaire est inférieure à 1, et
la viscosité complexe à 100°C et ω = 6,3 s⁻¹ va de 5 à 1 000 Pa.s.

2. Caoutchouc fluoré selon la revendication 1, caractérisé en ce que la viscosité complexe est multipliée au maximum par le facteur 5 lorsqu'on porte la température à 80°C ou au-dessus et qu'on abaisse la fréquence cyclique ω de 50 à 0,5 s⁻¹.

3. Caoutchouc fluoré selon l'une des revendications 1 ou 2, caractérisé en ce que l'indice de température de la viscosité complexe, exprimé par le quotient de la viscosité à 40°C par la viscosité à 100°C va de 100 à 1 000.

4. Procédé de préparation d'un caoutchouc selon une ou plusieurs des revendications 1 à 3, caractérisé en ce que l'on soumet à polymérisation radicalaire du fluorure de vinylidène et au moins un autre monomère fluoré et/ou non fluoré en présence d'au moins un dérivé diiodoorganique et d'au moins un inducteur
dans une phrase de réaction liquide dans laquelle les monomères, l'inducteur et le dérivé diiodoorganique sont en solution, à des températures de 30 à 130°C
sous une pression telle que la fraction du monomère dans la phase de réaction liquide est d'au moins 20 % en poids,
et en l'absence d'eau,
le caoutchouc fluoré formé constituant une phase séparée.

5. Procédé selon la revendication 4, caractérisé en ce que la quantité du dérivé diiodoorganique correspond à 0,5 à 2,8 parties en poids d'iode pour 100 parties en poids de monomère fluoré polymérisé.

6. Procédé selon l'une des revendications 4 à 5, caractérisé en ce que l'on utilise en tant qu'inducteur un peroxyde organique ou organique fluoré du groupe des peroxydes de dialkyle, des peroxydes de diacyle, des peroxydicarbonates de dialkyle, des alkylperesters, ou des peracétals.

7. Procédé selon une ou plusieurs des revendications 4 à 6, caractérisé en ce que la réaction est réalisée en présence d'au moins un solvant inerte pour les monomères.

8. Procédé selon une ou plusieurs des revendications 4 à 7, caractérisé en ce que le dérivé diiodoorganique utilisé est le diiodométhane et/ou le 1,4-diiodoperfluorobutane.

9. Procédé selon une ou plusieurs des revendications 4 à 8, caractérisé en ce que, après la polymérisation, le caoutchouc fluoré est refoulé du récipient de réaction au travers d'une vidange de fond de réacteur à une température correspondant au moins à la température de réaction.

10. Procédé selon la revendication 9, caractérisé en ce que, lors de l'opération de vidange, il reste encore une partie au moins du solvant et/ou du monomère utilisé à la polymérisation.

11. Utilisation du caoutchouc fluoré selon une ou plusieurs des revendications 1 à 3, en tant que produit de revêtement ou pour la fabrication d'objets moulés élastiques à la manière des caoutchoucs.
